# EUROPÄISCHE PATENTSCHRIFT

(11) **EP 3 680 006 B1**
(45) Veröffentlichungstag und Bekanntmachung des Hinweises auf die Patenterteilung: **09.03.2022**
(21) Anmeldenummer: 19151597.2
(22) Anmeldetag: 14.01.2019
(51) Int. Cl.: B01F 7/00, G01G 19/30, B01F 13/10, B01F 15/04, B23B 31/12, B01F 3/08

(54) **VERFAHREN ZUR EINWAAGE UNTER VERWENDUNG EINER GRAVIMETRISCHEN DOSIERANLAGE UNTER AN- UND ABKOPPLUNG DER ZUR DURCHMISCHUNG EINGESETZTEN RÜHRORGANE SOWIE GRAVIMETRISCHE DOSIERANLAGE**
METHOD FOR WEIGHING USING A GRAVIMETRIC DOSING SYSTEM WITH CONNECTION AND DISCONNECTION OF THE MIXING UNITS USED FOR MIXING AND GRAVIMETRIC DOSING SYSTEM
PROCÉDÉ DE PESÉE D'ESSAI À L'AIDE D'UNE INSTALLATION DE DOSAGE GRAVIMÉTRIQUE À COUPLAGE ET DÉCOUPLAGE DE L'ORGANE AGITATEUR UTILISÉ POUR LE MÉLANGE AINSI QUE INSTALLATION DE DOSAGE GRAVIMÉTRIQUE

(43) Veröffentlichungstag der Anmeldung: 15.07.2020
(73) Patentinhaber: BASF Coatings GmbH, 48165 Münster (DE); Fricke Abfülltechnik GmbH & Co., 32423 Minden (DE)
(72) Erfinder: BLASER, Alexander, 48165 Münster (DE); MARKMANN, Mario, 32584 Löhne (DE); OESTERMANN, Olaf, 32423 Minden (DE)
(74) Vertreter: Steffan & Kiehne Patentanwälte PartG mbB

(56) Entgegenhaltungen:
- CN-A- 106 401 190
- DE-A1-102015 207 875
- DE-A1-102016 114 770
- DE-U1-202007 007 305
- DE-U1-202013 005 081
- GB-A- 663 739
- US-A- 3 692 321
- US-A1- 2018 272 298
- US-B1- 6 955 227

## Beschreibung

Die vorliegende Erfindung betrifft ein Verfahren zur Einwaage wenigstens einer Komponente unter Verwendung einer gravimetrischen Dosieranlage und umfasst wenigstens einen Schritt (1), nämlich eine Dosierung in einen geeigneten Behälter, die in wenigstens zwei Dosierphasen (I) und (II) unter wenigstens teilweiser Durchmischung mittels eines Rührwerks erfolgt, wobei (1) innerhalb von wenigstens sieben Stufen (1a) bis (1g) durchgeführt wird, nämlich einer ersten Dosierung in Dosierphase (I) (1a), Abkopplung des Rührorgans von dem Antrieb des Rührwerks (1b), Bestimmung der Menge der in den Behälter dosierten Komponente (1c), Ankopplung des Rührorgans an den Antrieb des Rührwerks (1d), einer zweiten Dosierung in Dosierphase (II) (1e), Abkopplung des Rührorgans von dem Antrieb des Rührwerks (1f) und Bestimmung der Menge der in den Behälter dosierten Komponente (1g), wobei das Abkoppeln gemäß den Stufen (1b) und (1f) und das Ankoppeln gemäß Stufe (1d) mittels eines Mehrbackenfutters durchgeführt wird, ein Verfahren zum Abkoppeln oder Ankoppeln wenigstens eines Rührorgans eines Rührwerks von dem Antrieb des Rührwerks unter Einsatz des vorgenannten Futters, ein solches Futter per se sowie eine entsprechende Verwendung des Futters.

### Stand der Technik

In der Automobilindustrie einsetzbare Beschichtungsmittelzusammensetzungen werden heutzutage sowohl üblicherweise im (groß)industriellem Maßstab als auch zu Entwicklungszwecken im Labor noch immer in der Mehrheit manuell durch entsprechende Einwaagen der zu ihrer Herstellung eingesetzten Komponenten hergestellt. Eine Alternative zu einer solchen manuellen Einwaage ist der Einsatz einer hierfür geeigneten automatisierten Dosieranlage. Die Dosieranlage wird dabei zur Herstellung einer Vielzahl chemisch und anwendungstechnisch unterschiedlicher Beschichtungsmittelzusammensetzungen und Vorstufen davon eingesetzt wie zum Beispiel von Elektrotauchlacken, Füllern, Basislacken und Decklacken einschließlich Klarlacken und Vorstufen wie Pigmentpasten oder Halbfabrikaten im Allgemeinen.

Bei der Herstellung vieler solcher Beschichtungsmittelzusammensetzungen wie zum Beispiel von Wasserbasislacken ist ein kontinuierliches Durchmischen der zur Herstellung eingesetzten Komponenten aufgrund von auftretenden Viskositätsänderungen bei der Dosierung erforderlich, insbesondere dann, wenn sowohl hydrophile als auch hydrophobe Komponenten eingesetzt werden. Schlimmstenfalls kann es ansonsten zu einem Ausfallen einzelner Komponenten während der Zugabe kommen, beispielsweise bei der Zumischung einer hydrophilen Komponente zu einer hydrophoben Mischung. Eine kontinuierliche Durchmischung mittels Rühren ist deshalb nicht erst nach erfolgter Zugabe aller Komponenten erforderlich, sondern bereits zu jedem Zeitpunkt während ihrer Zugabe, um währenddessen dauerhaft eine konstante Trombe (Vortex) aufgrund des Donut-Effektes während der Durchmischung zu gewährleisten.

Den hierfür eingesetzten Dosieranlagen zur Herstellung dieser Beschichtungsmittelzusammensetzungen oder ihrer Vorstufen liegt üblicherweise eine gravimetrische Arbeitsweise zugrunde, d.h. die Dosierung der Komponenten erfolgt über eine Gewichtsbestimmung der herzustellenden Zusammensetzung. Problematisch ist hierbei jedoch, dass oftmals im Fall einer solchen gravimetrischen Dosierung zumindest nicht über die gesamte Dauer der Zugabe der einzelnen Komponenten eine Durchmischung mittels Rühren möglich ist, da ansonsten Fehldosierungen auftreten können, wodurch es allerdings zu den vorstehend genannten Problemen kommen kann.

Auch im Fall gravimetrischer Dosieranlagen, die eine kontinuierliche Durchmischung der einzelnen Komponenten durch Rühren während der gesamten Dauer der Herstellung ermöglichen, kann es jedoch aufgrund der gravimetrischen Arbeitsweise solcher Dosieranlagen zu unerwünschten Fehldosierungen kommen: üblicherweise werden zum Rühren während der gesamten Dauer des Herstellprozesses Rührwerke eingesetzt, die eine Rührwelle aufweisen, an die ein oder mehrere Rührkörper befestigt sind. Die Rührwelle befindet sich in Abhängigkeit vom jeweiligen Füllstand während der Dosierung in dem zu durchmischenden Medium, welches durch die zur Herstellung der gewünschten Zielformulierung eingesetzten Komponenten gebildet wird. Das Rührwerk wird dabei während der Dauer der Herstellung mittels eines Motors angetrieben, um eine kontinuierliche Durchmischung zu gewährleisten. Im Fall einer solchen Kopplung des Rührwerks mit dem Motor führt dieser Kraftschluss jedoch während der gesamten Dauer des Herstellprozesses zu einem unerwünschten systematischen Dosierfehler: Der physikalische Grund hierfür ist die Auftriebskraft, da das durch das Rührwerk verdrängte Volumen des durchmischten Mediums innerhalb des Behälters, in den dosiert wird, aufgrund des Auftriebs eine Verfälschung des von der eingesetzten Waage angezeigten Waagesignals verursacht. Dadurch wird in Wirklichkeit nicht die tatsächlich dosierte Menge über das Waagesignal angezeigt, sondern eine höhere Menge als die tatsächlich zugegebene Menge, wodurch es zu einer systematischen Unterdosierung und damit Fehldosierung kommt. Dies ist natürlich unerwünscht, da dann die tatsächliche Dosierung nicht dem vorgesehenen Rezept der Zielformulierung entspricht.

Es besteht daher ein Bedarf an einem Verfahren zur Einwaage von Komponenten unter Verwendung einer gravimetrischen Dosieranlage in für die Einwaage geeignete Behälter, welches zu jedem Zeitpunkt der Dosierung eine ununterbrochene Durchmischung der Komponenten erlaubt, dabei aber das Auftreten von systematischen Fehldosierungen wie Unterdosierungen durch die um das mittels des Rührwerks verdrängte Volumen verdrängte Flüssigkeit im Behälter vermeidet.

Die Druckschriften GB 663 739 A und CN 106 401 190 A offenbaren ein Verfahren gemäß dem Oberbegriff des Anspruchs 1 und eine Dosieranlage gemäß dem Oberbegriff des Anspruchs 10.

### Aufgabe

Eine Aufgabe der vorliegenden Erfindung ist es daher, ein Verfahren zur Einwaage einer Komponente unter Verwendung einer gravimetrischen Dosieranlage in einen für die Einwaage geeignete Behälter bereitzustellen, welches zu jedem Zeitpunkt der Dosierung eine ununterbrochene Durchmischung der Komponente erlaubt, dabei aber das Auftreten von systematischen Fehldosierungen wie Unterdosierungen bei der Einwaage vermeidet. Insbesondere ist es eine Aufgabe der vorliegenden Erfindung ein solches Verfahren bereitzustellen, welches zur Herstellung einer Beschichtungsmittelzusammensetzung oder einer Vorstufe davon, geeignet ist und welches das Auftreten der vorgenannten systematischen Unterdosierungen verhindert.

Diese Aufgabe wird gelöst durch die in den Patentansprüchen beanspruchten Gegenstände.

Vorzugsweise wird das erfindungsgemäße Verfahren zur Herstellung einer in der Automobilindustrie einsetzbaren Beschichtungsmittelzusammensetzung oder einer Vorstufe davon eingesetzt, wobei Schritt (1) des Verfahrens einschließlich der Stufen (1a) bis (1g) in diesem Fall wenigstens insgesamt zweimal für wenigstens zwei voneinander verschiedene Komponenten durchgeführt wird.

**Es wurde überraschend** gefunden, dass durch das offenbarte Mehrbackenfutter ein insbesondere automatisiertes Abkoppeln und/oder Ankoppeln wenigstens eines Rührorgans eines Rührwerks von dem Antrieb des Rührwerks erfolgen kann, insbesondere innerhalb des erfindungsgemäßen Verfahrens zur Einwaage wenigstens einer Komponente unter Verwendung einer gravimetrischen Dosieranlage gemäß einem Rezept zur Herstellung einer Zielformulierung, und zwar insbesondere dann, wenn das erfindungsgemäße Verfahren ein Verfahren zur Herstellung einer in der Automobilindustrie einsetzbaren Beschichtungsmittelzusammensetzung oder einer Vorstufe davon ist. Das Abkoppeln bzw. Ankoppeln des wenigstens eines Rührorgans eines Rührwerks von dem Antrieb des Rührwerks zwischen wenigstens zwei innerhalb der Dosierung eingesetzten Dosierphasen ermöglicht überraschenderweise ein Vermeiden des Auftretens von systematischen Fehldosierungen, insbesondere Unterdosierungen bei der Einwaage, wobei dennoch sichergestellt ist, dass während der gesamten Dauer der Dosierung eine Durchmischung der in dem Behälter befindlichen Komponente(n) erfolgen kann. Es wurde überraschenderweise gefunden, dass Unterdosierungen deswegen vermieden werden können, da durch das vorgenannte Ab- bzw. Ankoppeln keine Verdrängungsfehler aufgrund von während der Durchmischung auftretenden Auftriebskräften das gravimetrische Waagesignal verfälschen können, da zu diesem Zeitpunkt der gravimetrischen Bestimmung zwischen Rührorgan und Antrieb des Rührwerks kein Kraftschluss (mehr) vorliegt. Da die finale Dosierung üblicherweise im Pulsdosierbetrieb stattfindet, kann das Rührorgan nun nach jedem oder mehreren aufeinanderfolgenden Dosierpuls(en) abgekoppelt und die jeweilige Pulszugabe ohne Verdrängungsfehler bei Kraftschluss verwogen werden.

Das insbesondere automatisiertes Abkoppeln und/oder Ankoppeln wenigstens eines Rührorgans eines Rührwerks von dem Antrieb des Rührwerks ist besonders vorteilhaft innerhalb von gravimetrischen Dosieranlagen einsetzbar, die eine Vielzahl an Dosierventilen aufweisen, insbesondere wenn mehrere solcher Dosierventile nebeneinander in einer ersten Reihe angeordnet sind und hinter dieser ersten Reihe eine zur ersten Reihe parallele zweite Reihe an Dosierventilen verläuft. Gegebenenfalls können natürlich weitere entsprechende Reihen an Dosierventilen in eine solche Dosieranlage integriert sein. Solche Dosieranlagen weisen zudem mehrere Rührwerke oder zumindest mehrere Rührorgane auf, die beispielsweise mittels einer Schiene beweglich sind und auf dieser zumindest innerhalb einer Reihe an beliebige Positionen gefahren werden können, da zum einen aufgrund von zumindest teilweise fest installierten Rohrleitungen, die die Dosierventile mit Vorratsbehältern verbinden, aus Platzgründen keine Bewegung der Rührwerke von einer Reihe zur nächsten Reihe möglich ist, und zum anderen die Rührwerke üblicherweise mittels eines Motors angetrieben werden, der eine entsprechende Größe aufweist und daher nicht Reihen-übergreifend bewegt werden kann. Gerade für solche Dosieranlagen, die mehrere Rührwerke oder zumindest mehrere Rührorgane aufweisen, ist das insbesondere automatisiertes Abkoppeln und/oder Ankoppeln besonders vorteilhaft.

Es wurde ferner überraschend gefunden, dass mittels des Mehrbackenfutters, insbesondere Sechsbackenfutters, eine präzise Zentrierung des Rührorgans, insbesondere der Rührwelle, des Rührwerks innerhalb des Futters ermöglicht wird, so dass es bei der Durchmischung zu keinen unerwünschten Vibrationen des Rührwerks kommt, auch nicht bei vergleichsweise hohen Drehzahlen von bis zu 1500 min⁻¹. Durch die Vermeidung des Auftretens solcher Unwuchten beim Rührvorgang wird ein sicherer Betrieb gewährleistet und die Gefahr des Auftretens von Zündquellen minimiert.

### Ausführliche Beschreibung

### Mehrbackenfutter

Ein erster nicht-erfindungsgemäßer offenbarter Gegenstand ist ein Mehrbackenfutter umfassend wenigstens ein Spannsystem und wenigstens eine Drehdurchführung, wobei das Spannsystem mindestens drei Spannbacken umfasst, die zur Fixierung wenigstens eines Rührorgans eines Rührwerks geeignet sind, und wobei die Drehdurchführung zur Aufnahme eines Rührorgans eines Rührwerks geeignet ist und mindestens einen Druckluftanschluss aufweist, der eine pneumatische Ansteuerung der Spannbacken ermöglicht.

Der Begriff des Mehrbackenfutters ist dem Fachmann bekannt. Mehrbackenfutter sind im Sinne der vorliegenden Erfindung Spannfutter mit mehreren Spannbacken, mittels derer das Rührorgan wie beispielsweise die Rührwelle eines Rührwerks aufgenommen und fixiert werden kann. Neben einem solchen Futter als Spannsystem, welches die Spannbacken beinhaltet, umfasst das Mehrbackenfutter zudem eine Drehdurchführung, die ein Rotieren des eingespannten Rührorgans innerhalb des Backenfutters ermöglicht. Das Mehrbackenfutter kann daher auch als ein Drehfutter oder ein Spanndrehfutter bezeichnet werden, welches mehrere Spannbacken umfasst.

Der Bestandteil "Mehr-" in "Mehrbackenfutter" bezeichnet vorzugsweise die Anzahl an Spannbacken innerhalb des Mehrbackenfutters. Das Mehrbackenfutter umfasst dabei mindestens drei solcher Backen, vorzugsweise mindestens vier oder fünf, insbesondere mindestens sechs Backen. Vorzugsweise ist das Mehrbackenfutter daher ein Drei-, Vier, Fünf- oder Sechsbackenfutter. Besonders bevorzugt ist das Mehrbackenfutter ein Sechsbackenfutter, d.h. weist genau sechs Backen, insbesondere sechs Spannbacken auf. Die Backen dienen dabei zur Fixierung des Rührorgans, insbesondere der Rührwelle, des Rührwerks.

Das Mehrbackenfutter kann mittels seiner Spannbacken an dem Rührorgan des Rührwerks befestigt werden. Dadurch wird die Aufnahme und Fixierung des Rührorgans gewährleistet. Mittels des Mehrbackenfutters kann das Rührorgan eines Rührwerks in mehrere Backen gespannt werden. Beim Anziehen bewegen sich die Backen gleichmäßig in Richtung zur Drehachse, so dass das Rührorgan immer zentriert befestigt wird. Die Backen werden mittels pneumatischen Antriebs betrieben bzw. gespannt.

Das Mehrbackenfutter ist pneumatisch ansteuerbar. Das Mehrbackenfutter ist zur Aufnahme und Drehung (Rotation) eines Rührorgans mit bis zu 1500 Upm (Umdrehungen pro Minute) geeignet. Um das Mehrbackenfutter mit der erforderlichen Druckluft zum Schließen bzw. Öffnen der Backen zu versorgen, weist es eine Drehdurchführung auf. Mittels der Drehdurchführung wird insbesondere gewährleistet, dass, dass das Spannsystem des Mehrbackenfutters mit Druckluft versorgt und entlüftet werden kann, um die An- bzw. Abkopplung erzielen zu können.

Vorzugsweise enthält die Drehdurchführung ein aufgenommenes Rührorgan eines Rührwerks, welches mittels der Spannbacken des Spannsystems fixiert ist. In diesem Fall ist das Rührorgan angekoppelt.

Vorzugsweise sind Spannsystem und Drehdurchführung des Mehrbackenfutters miteinander verschraubt. Auf diese Weise ist gewährleistet, dass diese beiden Komponenten des Mehrbackenfutters fest miteinander verbunden sind. Bei pneumatischer Ansteuerung über den Druckluftanschluss drehen sich beide Komponenten so gemeinsam entsprechend der gewählten Drehzahl des Rührwerks.

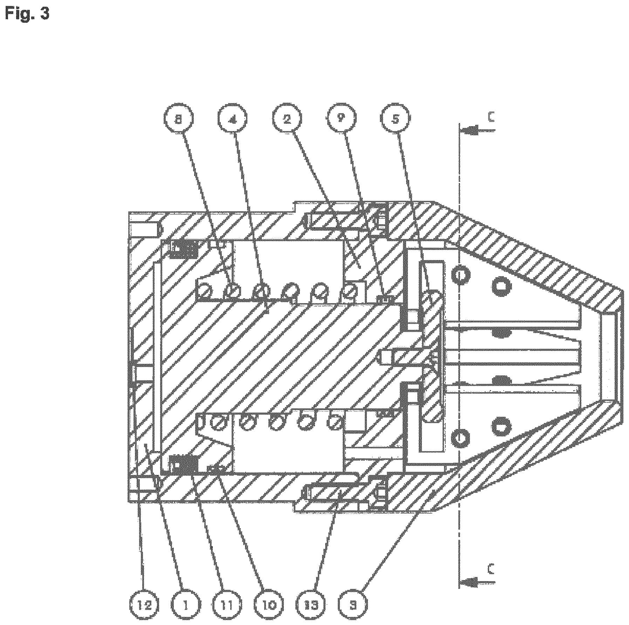

Vorzugsweise umfasst das Spannsystem einen beweglichen Kolben, vorzugsweise in Kombination mit einer Kolbendichtung und einer Führungsscheibe, wie es beispielsweise **Fig.** 3 zu entnehmen ist.

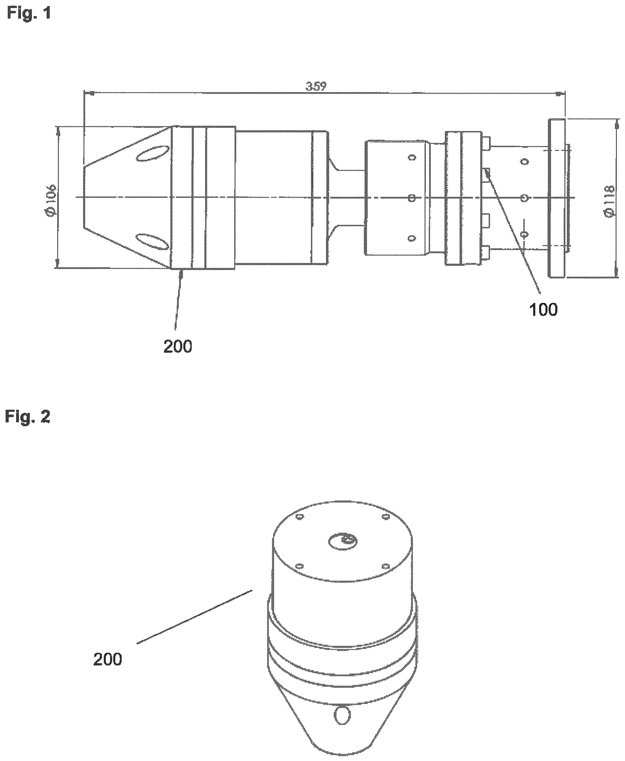

Fig. 1 zeigt einen schematischen Querschnitt einer beispielhaften Ausgestaltung des Mehrbackenfutters. Das Mehrbackenfutter umfasst dabei ein Spannsystem (200) als Backenfutter, welches wiederum die eingesetzten vorzugsweise sechs Spannbacken enthält, sowie eine Drehdurchführung (100), die in das Spannsystem (200) eingelassen ist. Die Drehdurchführung ist rotierbar und weist mindestens einen Druckluftanschluss auf, durch den Druckluft zum Schließen/Greifen, also Fixieren des Rührorgans, insbesondere der Rührwelle, zwecks pneumatischen Antriebs bzw. zwecks pneumatischer Steuerung in das Backenfutter geleitet werden kann. Im angekoppelten Zustand kann die Drehdurchführung zusammen mit dem Rührorgan des Rührwerks rotieren.

**Fig. 2** zeigt eine schematische Draufsicht einer beispielhaften Ausgestaltung des Mehrbackenfutters von außen. Die Drehdurchführung ist hier aus Gründen der Übersichtlichkeit nicht eingezeichnet.

**Fig. 3** zeigt einen schematischen Querschnitt einer beispielhaften Ausgestaltung des Mehrbackenfutters. Bei dem Mehrbackenfutter der **Fig. 3** handelt es sich um ein Sechsbackenfutter, welches ein Spannsystem umfasst wie es schematisch in **Fig. 1** dargestellt ist. Das Spannsystem umfasst ein Zylinderrohr (1) sowie einen Zylinderdeckel (2) und vier Zylinderschrauben (13). Zudem umfasst es an seinem unteren Ende ein Kegelgehäuse (3). In das Zylinderrohr (1) eingebettet befindet sich ein bewegbarer Kolben (4). Die Bewegbarkeit des Kolbens wird u.a. gewährleistet durch einen Kolbenführungsring (10) sowie einer Kolbendichtung (11). Das Spannsystem umfasst zudem einen O-Ring (12). Das Spannsystem umfasst zudem eine Führungsscheibe (5) und eine Druckfeder (8).

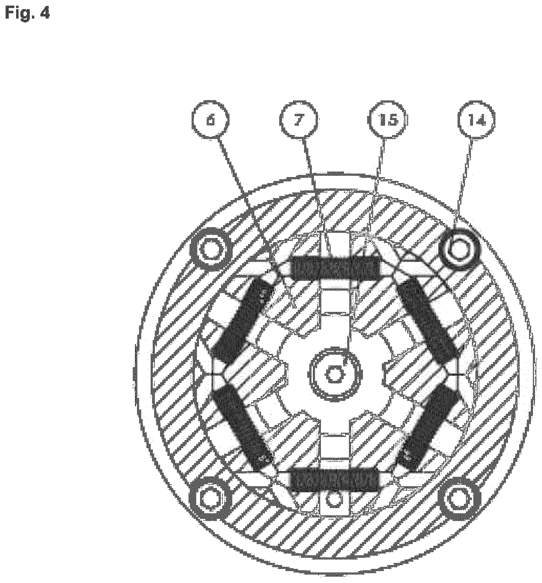

Fig. 4 zeigt einen schematischen Teilquerschnitt der beispielhaften Ausgestaltung des Mehrbackenfutters gemäß Fig. 3. Die vier Zylinderschrauben (13) aus Fig. 3 entsprechen hier den vier Zylinderschrauben (14).

Erkennbar ist zudem eine Senkkopfschraube (15). Das Backenfutter enthält insgesamt sechs Spannbacken (6) sowie insgesamt zwölf Druckfedern (7), *Verwendung des Mehrbackenfutters* Ein nicht-erfindungsgemäßer Gegenstand der vorliegenden Beschreibung ist die Verwendung des Mehrbackenfutters zum Abkoppeln und/oder Ankoppeln wenigstens eines Rührorgans eines Rührwerks von dem Antrieb/an den Antrieb des Rührwerks. Die Verwendung erfolgt vorzugsweise durch pneumatische Steuerung des Backenfutters mittels Druckluft.

Alle im Zusammenhang mit dem Mehrbackenfutter per se zuvor beschriebenen bevorzugten Ausführungsformen sind auch bevorzugte Ausführungsformen hinsichtlich der erfindungsgemäßen Verwendung des Mehrbackenfutters.

*Verfahren zum Abkoppeln* und/oder *Ankoppeln wenigstens eines Rührorgans eines Rührwerks von dem Antrieb*/*An den Antrieb des Rührwerks* Ein nicht-erfindungsgemäßer Gegenstand der vorliegenden Beschreibung ist ein Verfahren zum Abkoppeln und/oder Ankoppeln wenigstens eines Rührorgans eines Rührwerks von dem Antrieb/an den Antrieb des Rührwerks umfassend wenigstens den Schritt (a), nämlich
(a) Abkoppeln und/oder Ankoppeln des wenigstens eines Rührorgans des Rührwerks von dem Antrieb/an den Antrieb des Rührwerks, wobei Schritt (a) unter Verwendung des Mehrbackenfutters durchgeführt wird.

Schritt (a) erfolgt vorzugsweise durch pneumatische Steuerung des Backenfutters mittels Druckluft.

### Kit-of-parts

Ein nicht-erfindungsgemäßer Gegenstand der vorliegenden Beschreibung ist ein Kit-of-parts umfassend wenigstens ein Mehrbackenfutter und wenigstens ein Rührwerk umfassend wenigstens ein Rührorgan, welches vom Antrieb des Rührwerks abund/oder ankoppelbar ist, insbesondere eines solchen Rührorgans, welches eine Rührwelle umfasst, die einen oder mehrere Rührkörper aufweist. Die An- und/oder Ankopplung erfolgt durch das Mehrbackenfutter.

### Erfindungsgemäßes Verfahren zur Einwaage einer Komponente unter Verwendung einer gravimetrischen Dosieranlage

Das erfindungsgemäße Verfahren ist ein Verfahren zur Einwaage wenigstens einer Komponente unter Verwendung einer gravimetrischen Dosieranlage gemäß einem Rezept zur Herstellung einer Zielformulierung, wobei das Verfahren wenigstens den Schritt (1) umfasst, nämlich
(1) eine Dosierung der wenigstens einen Komponente mittels wenigstens eines Dosierventils in einen geeigneten Behälter,
   wobei die Dosierung gemäß Schritt (1) in wenigstens zwei Dosierphasen (I) und (II) erfolgt, während der Dauer von jeder der wenigstens zwei Dosierphasen (I) und (II) zumindest teilweise eine Durchmischung der in dem Behälter befindlichen Komponente unter Einsatz eines Rührwerks erfolgt, welches wenigstens einen Antrieb und wenigstens ein Rührorgan umfasst, und Schritt (1) innerhalb von wenigstens sieben Stufen (1a), (1b), (1c), (1d), (1e), (1f) und (1g) in dieser Reihenfolge durchgeführt wird.

Vorzugsweise erfolgt während der gesamten Dauer von jeder der wenigstens zwei Dosierphasen (I) und (II) eine Durchmischung der in dem Behälter befindlichen Komponente unter Einsatz eines Rührwerks.

Der Begriff "Dosierphase" stellt im Sinne der vorliegenden Erfindung vorzugsweise eine Zeitdauer dar, innerhalb derer die jeweilige Dosierung erfolgt. Eine Dosierphase kann dabei kontinuierlich sein bzw. durchgeführt werden. Dies bedeutet, dass die jeweilige Dosierung während der Dauer dieser Dosierphase ununterbrochen erfolgt. Eine solche kontinuierliche Dosierphase wird insbesondere bei der Grobdosierung und der Feindosierung gewählt. Im Fall der Grobdosierung wird der Großteil der zu dosierenden Menge (Dosier-Sollmenge) einer Komponente in den Behälter dosiert, beispielsweise 85 bis 95 Gew.-% der Gesamtmenge der Komponente, die zur Dosierung vorgesehen ist. Bei der Grobdosierung ist das Dosierventil üblicherweise vergleichsweise weit geöffnet. Die Zeitdauer der Dosierphase liegt in diesem Fall üblicherweise im Bereich von einigen Sekunden wie zum Beispiel 10 Sekunden bis zu 5 Minuten. Die Zeitdauer der Dosierphase kann aber auch etwas kürzer sein, beispielsweise im Bereich von 1 Sekunde bis <10 Sekunden liegen. Solche Zeitdauern werden insbesondere bei der Feindosierung realisiert. Die Feindosierung erfolgt üblicherweise nach der Grobdosierung. Während der Feindosierung wird der Großteil der verbleibenden noch zu dosierenden Menge der Komponente in den Behälter dosiert, beispielsweise - nach erfolgter Grobdosierung von 90 Gew.-% - weitere 5 bis 8 Gew.-% der Gesamtmenge der Komponente, die zur Dosierung vorgesehen ist. Bei der Feindosierung ist das Dosierventil üblicherweise weniger weit geöffnet als bei der Grobdosierung. Eine Dosierphase kann aber auch diskontinuierlich sein bzw. durchgeführt werden. Dies bedeutet, dass die jeweilige Dosierung während der Dauer dieser Dosierphase nicht ununterbrochen erfolgt. Eine solche diskontinuierliche Dosierphase wird insbesondere bei der Ultrafeindosierung gewählt. Diese erfolgt üblicherweise nach der vorbeschriebenen Feindosierung und beinhaltet die Dosierung der noch verbleibenden Menge der zu dosierenden Komponente in den Behälter, beispielsweise - nach erfolgter Grobdosierung von 90 Gew.-% und nach erfolgter Feindosierung von weiteren 7,5 Gew.-% - die verbleibenden 2,5 Gew.-% der Gesamtmenge der Komponente, die zur Dosierung vorgesehen ist. Bei der Ultrafeindosierung ist das Dosierventil üblicherweise genauso weit oder weniger geöffnet als bei der Feindosierung. Die Ultrafeindosierung beinhaltet üblicherweise zwei oder mehrere wie 3, 4 oder 5 Dosierpulse. Es wird nur während der Dauer eines einzelnen Dosierpulses dosiert. Zwischen den einzelnen Dosierpulsen - in den Intervallen dazwischen - erfolgt keine Dosierung. Die Zeitdauer einer solchen diskontinuierlichen Dosierphase kann im Bereich von Millisekunden bis zu 10 Sekunden liegen. Die einzelnen Dosierpulse einer solchen diskontinuierlichen Dosierphase weisen üblicherweise Zeitdauern im Bereich von einigen Millisekunden bis zu 1 Sekunde auf. Gleiches gilt für die Zeitdauern der Intervalle dazwischen.

Vorzugsweise erfolgt wenigstens eine der beiden Dosierphasen (I) und (II) kontinuierlich, besonders bevorzugt die Dosierphase (I).

Vorzugsweise erfolgt wenigstens eine der beiden Dosierphasen (I) und (II) diskontinuierlich und umfasst wenigstens zwei oder mehr Dosierpulse, besonders bevorzugt die Dosierphase (II).

Das erfindungsgemäße Verfahren umfasst wenigstens den Schritt (1), kann jedoch noch weitere optionale Schritte enthalten. Gleichermaßen kann Schritt (1) weitere optionale Stufen umfassen.

Vor Durchführung von Stufe (1a) des Schrittes (1) erfolgt vorzugsweise eine gravimetrische Bestimmung des Leergewichts des eingesetzten Behälters (Tarieren) (Stufe 0a). Während dieser Bestimmung ist das Rührorgan vorzugsweise von dem Antrieb des Rührwerks abgekoppelt. Nach einer solchen gravimetrischen Bestimmung des Leergewichts des eingesetzten Behälters und noch vor Durchführung von Stufe (1a) erfolgt vorzugsweise eine Ankopplung des Rührorgans an den Antrieb des Rührwerks (Stufe 0b). Im Anschluss wird vorzugsweise Stufe (1a) des Schrittes (1) durchgeführt.

Als entsprechende wenigstens eine Komponente wird vorzugsweise eine Lösung oder Dispersion eingesetzt.

Die Dosierung gemäß Schritt (1) umfasst gegebenenfalls eine oder mehrere weitere Dosierphasen, wenn die gravimetrische Bestimmung gemäß Stufe (1g) ergibt, dass die eingewogene und in den Behälter dosierte Menge der Komponente noch nicht der derjenigen Menge entspricht, die durch das Rezept der Zielformulierung vorgegeben ist.

Während der Dauer der jeweiligen Dosierphasen ist das jeweilige Dosierventil der gravimetrischen Dosieranlage vorzugsweise geöffnet; es erfolgt eine Dosierung. Im Fall einer diskontinuierlichen Dosierphase ist das jeweilige Dosierventil der gravimetrischen Dosieranlage vorzugsweise nur während der Dauer des Dosierpulses geöffnet.

Das Abkoppeln gemäß den Stufen (1b) und (1f) und das Ankoppeln gemäß Stufe (1d) werden mittels eines Mehrbackenfutters durchgeführt.

Schritt (1) wird innerhalb von wenigstens sieben Stufen (1a), (1b), (1c), (1d), (1e), (1f) und (1g) in dieser Reihenfolge durchgeführt, nämlich
(1a) erste Dosierung während der Dauer der ersten Dosierphase (I) unter Durchmischung mittels des Rührwerks,
(1b) Abkopplung des Rührorgans von dem Antrieb des Rührwerks,
(1c) gravimetrische Bestimmung der Menge der in den Behälter dosierten Komponente mittels einer Waage,
(1d) Ankopplung des Rührorgans an den Antrieb des Rührwerks,
(1e) zweite Dosierung während der Dauer der zweiten Dosierphase (II) unter Durchmischung mittels des Rührwerks,
(1f) Abkopplung des Rührorgans von dem Antrieb des Rührwerks, und
(1g) gravimetrische Bestimmung der Menge der in den Behälter dosierten Komponente mittels einer Waage.

Vorzugsweise erfolgt das Abkoppeln gemäß den Stufen (1b) und (1f) und das Ankoppeln gemäß Stufe (1d) jeweils automatisiert. Die Automatisierung erfolgt dabei vorzugsweise mittels Unterstützung einer Software. Vorzugsweise erfolgt die gesamte Durchführung von Schritt (1) automatisiert. Vorzugsweise erfolgen das Abkoppeln gemäß den Stufen (1b) und (1f) und das Ankoppeln gemäß Stufe (1d) durch pneumatische Steuerung des erfindungsgemäßen Mehrbackenfutters mittels Druckluft.

Nach erfolgter Abkopplung gemäß den Stufen (1b) und (1f) wird das Rührorgan vorzugsweise in den Behälter eingesenkt, jedoch ohne dabei den Behälterboden zu berühren, so dass im Anschluss jeweils gemäß den Stufen (1c) und (1g) eine gravimetrische Bestimmung erfolgen kann. Während dieser findet jeweils keine Durchmischung statt. Nach Beenden der gravimetrischen Bestimmung gemäß der Stufe (1c) und gegebenenfalls nach Stufe (1g) wird das Mehrbackenfutter vorzugsweise nach unten bewegt und zieht das Rührorgan wieder nach oben, um es wieder an den Antrieb des Rührwerks anzukoppeln (gemäß Schritt (1e)), um eine weitere nachfolgende Dosierphase unter Rühren zu ermöglichen.

Das Rührwerk umfasst wenigstens einen Antrieb und wenigstens ein Rührorgan. Der Antrieb ist vorzugsweise ein Motor wie ein elektrischer Motor und durch diesen ansteuerbar, bedienbar und betreibbar.

Vorzugsweise weist das wenigstens eine Rührorgan des Rührwerks eine Rührwelle und wenigstens einen daran befestigten Rührkörper auf.

Jede Art von Rührkörpern können eingesetzt werden. Vorzugsweise sind die Rührkörper ausgewählt aus der Gruppe bestehend aus Propellern, Schrägblättern, Scheiben, Taumelscheiben, Hollowblades, Impellern, Kreuzbalken, Ankern, Blättern, Gittern und Zahnscheiben sowie Lenartscheiben. Der oder die Rührkörper können dabei wie erwähnt an eine Rührwelle angebracht sein.

Das Rührwerk ist vorzugsweise zu einer Höchstdrehzahl bis 1500 min⁻¹ befähigt. Das Rührwerk ist vorzugsweise höhenverstellbar, insbesondere ist die Rührwelle als Teil des Rührwerks höhenverstellbar, um eine kontinuierliche Anpassung der Position, insbesondere Höhe, des Rührkörpers an den jeweiligen Füllstand innerhalb des Behälters zu gewährleisten.

Vorzugsweise wird das Gewicht des eingesetzten Behälters und darin bereits eingewogener Komponenten wenigstens nach der erfolgten Abkopplung gemäß den Stufen (1b) und (1f) bestimmt. Das Gewicht des eingesetzten vorzugsweise leeren Behälters vor der Durchführung von Schritt (1) ist vorzugsweise bekannt. Das Gewicht des eingesetzten Behälters und darin bereits eingewogener Komponenten, d.h. im Falle eines vor Durchführung von Schritt (1) leeren Behälters die Summe aus Leergewicht des Behälters und aus darin bereits eingewogenen Komponenten, wird vorzugsweise wenigstens nach der erfolgten Abkopplung gemäß den Stufen (1b) und (1f) bestimmt.

Vorzugsweise weist der eingesetzte Behälter vor Durchführung von Schritt (1) ein ermitteltes und daher bekanntes Leergewicht auf. Das Gewicht des Behälters kann dabei mittels einer Waage wie einer elektrischen bzw. digitalen Waage noch vor Durchführung des Schrittes (1) ermittelt oder noch vor Beginn der Dosierung gemäß Schritt (1) mittels der eingesetzten gravimetrischen Dosieranlage bestimmt werden. Ist der Behälter vor Durchführung des Schrittes (1) leer, was vorzugsweise der Fall ist, so entspricht das so ermittelte bzw. bestimmte Gewicht dem Leergewicht des Behälters.

Das Volumen des Innenraums des eingesetzten Behälters ist vorzugsweise ebenfalls bekannt. In diesem Fall stellt das Volumen des Innenraums des Behälters ein vordefiniertes Volumen dar, welches auf Grundlage der Geometrie des Innenraums des Behälters (z.B. Breite, Höhe, Länge, Radius und/oder Durchmesser) berechenbar und daher bekannt ist.

Vorzugsweise weist der eingesetzte Behälter auf seiner Außenseite ein elektronisch lesbares Etikett wie einen Barcode auf, der gescannt werden kann. Das Etikett enthält vorzugsweise wenigstens die Information des Leergewichts des Behälters und/oder Informationen zur Geometrie des Innenraums des eingesetzten Behälters und/oder des Volumens des Innenraums. In diesem Fall kann das erfindungsgemäße Verfahren einen weiteren optionalen Schritt (0) umfassen, der ein elektronisches Lesen des Etiketts des Behälters beinhaltet. Die Durchführung von Schritt (1) des erfindungsgemäßen Verfahrens kann dann auf Grundlage dieser elektronisch gelesenen Information(en) erfolgen, insbesondere wenn die Durchführung des Schrittes (1) mittels Unterstützung einer Software erfolgt.

Vorzugsweise erfolgt die Dosierung gemäß Schritt (1) auf Grundlage eines elektronisch innerhalb einer Datenbank erstellten oder aus einer bestehenden Datenbank, vorzugsweise Online-Datenbank, abgerufenen Rezeptes einer Zielformulierung, welche zum Beispiel einer herzustellenden Beschichtungsmittelzusammensetzung oder einer Vorstufe davon entspricht. Das Rezept der Zielformulierung umfasst insbesondere die Art, Anzahl und Menge der Komponenten, die zur Herstellung der Zielformulierung erforderlich sind, sowie die Reihenfolge ihrer Zugabe.

Das Rezept der Zielformulierung kann weitere Informationen bezüglich der Herstellung der Zielformulierung enthalten, zum Beispiel allgemeingültige und produktionsgerechte und praxisgerechte Kennzahlen.

Vorzugsweise enthält das elektronisch lesbare Etikett wie der Barcode, der auf die Außenseite des Behälters aufgebracht werden und gescannt werden kann, zudem das Rezept der Zielformulierung.

Vorzugsweise wird das erfindungsgemäße Verfahren zur Herstellung einer in der Automobilindustrie einsetzbaren Beschichtungsmittelzusammensetzung oder einer Vorstufe davon eingesetzt, wobei Schritt (1) des Verfahrens einschließlich der Stufen (1a) bis (1g) in diesem Fall wenigstens insgesamt zweimal für wenigstens zwei voneinander verschiedene Komponenten durchgeführt wird.

Dabei sind sowohl Beschichtungsmittelzusammensetzungen herstellbar, die im Rahmen einer OEM-Serienlackierung als auch im Rahmen einer Reparaturlackierung eingesetzt werden können. Gleiches gilt für entsprechende Vorstufen.

Vorzugsweise wird das erfindungsgemäße Verfahren bei der Entwicklung von in der Automobilindustrie einsetzbaren Beschichtungsmittelzusammensetzungen oder Vorstufen davon eingesetzt, vorzugsweise innerhalb von Laboren wie Forschungsund Entwicklungslaboren. Gleichermaßen ist jedoch auch der Einsatz des erfindungsgemäßen Verfahrens innerhalb einer großtechnischen Produktion möglich.

In der Automobilindustrie einsetzbare Beschichtungsmittelzusammensetzungen sind beispielsweise Elektrotauchlacke, Primer, Füller, Basislacke, insbesondere Wasserbasislacke, Decklacke einschließlich von Klarlacken, insbesondere lösemittelbasierten Klarlacken. Die Herstellung von Wasserbasislacken ist besonders bevorzugt.

Der Begriff des Basislacks ist dem Fachmann bekannt und beispielsweise definiert im Römpp Lexikon, Lacke und Druckfarben, Georg Thieme Verlag, 1998, 10. Auflage, Seite 57. Unter einem Basislack ist demzufolge insbesondere ein in der Automobillackierung und allgemeinen Industrielackierung eingesetzter farbgebender und/oder farbgebender und einen optischen Effekt gebender Zwischenbeschichtungsstoff zu verstehen. Dieser wird im Allgemeinen auf einem mit Füller oder Primer vorbehandelten Metall- oder Kunststoffuntergrund, mitunter auch direkt auf dem Kunststoffuntergrund aufgebracht. Auch Altlackierungen, welche gegebenenfalls noch vorbehandelt werden müssen (beispielsweise durch Anschleifen), können als Untergründe dienen. Mittlerweile ist es durchaus üblich, mehr als eine Basislackschicht aufzutragen. Dementsprechend stellt in einem solchen Fall eine erste Basislackschicht den Untergrund für eine zweite dar. Um eine Basislackschicht insbesondere gegen Umwelteinflüsse zu schützen, wird auf dieser mindestens noch eine zusätzliche Klarlackschicht appliziert. Ein Wasserbasislack ist ein wässriger Basislack, in dem der Anteil an Wasser > als der Anteil an organischen Lösemitteln ist, bezogen auf das Gesamtgewicht an Wasser und organischen Lösemitteln in Gew.-% innerhalb des Wasserbasislacks.

Eine Vorstufe einer in der Automobilindustrie einsetzbaren Beschichtungsmittelzusammensetzung ist vorzugsweise eine Pigment- und/oder Füllstoffpaste. Der Begriff der Pigmentpaste beinhaltet dabei Farbpigmentpasten und Effektpigmentpasten. Vorstufen umfassen zudem (temporäre) Halbfabrikate, die zur Herstellung solcher Beschichtungsmittelzusammensetzungen eingesetzt werden können, insbesondere von Basislacken wie Wasserbasislacken, wie beispielsweise Bindemittel- und/oder Additiv-Mischungen. Der Begriff der Pigmentpaste ist dem Fachmann bekannt und beispielsweise definiert im Römpp Lexikon, Lacke und Druckfarben, Georg Thieme Verlag, 1998, 10. Auflage, Seite 452: Pigmentpasten sind Zubereitungen von Pigmentmischungen in Trägermaterialien wie Polymerisaten, in denen die Pigmente in einer höheren Konzentration vorliegen als es der späteren Anwendung entspricht. Die spätere Anwendung von Pigmentpasten liegt in der Regel in der Herstellung von Beschichtungsmittelzusammensetzungen wie Basislacken. Eine Pigmentpaste ist somit von einer Beschichtungsmittelzusammensetzung wie einem Basislack dahingehend zu unterscheiden, dass sie lediglich eine Vorstufe zur Herstellung einer solchen Beschichtungsmittelzusammensetzung darstellt. Eine Pigmentpaste als solche kann daher selbst nicht als Basislack eingesetzt werden. In Pigmentpasten ist üblicherweise das relative Gewichtsverhältnis von Pigmenten zu Polymerisaten größer als in den Beschichtungsmitteln, zu deren Herstellung die Paste schließlich eingesetzt wird. Neben den Trägermaterialien wie Polymerisaten, die auch Pastenbindemittel genannt werden, und Pigmenten sind in der Pigmentpaste üblicherweise auch Wasser und/oder organische Lösemittel vorhanden. Auch unterschiedliche Additive wie Netzmittel und/oder Verdicker können in einer Pigmentpaste eingesetzt werden. Eine Effektpigmentpaste stellt eine Pigmentpaste dar, die wenigstens ein Effektpigment als Pigment enthält. Ein Fachmann ist mit dem Begriff der Effektpigmente vertraut. Eine entsprechende Definition findet sich beispielsweise im Römpp Lexikon, Lacke und Druckfarben, Georg Thieme Verlag, 1998, 10. Auflage, Seiten 176 und 471. Eine Definition von Pigmentgen im Allgemeinen und weitere Spezifizierungen davon sind in der DIN 55943 (Datum: Oktober 2001) geregelt. Vorzugsweise handelt es sich bei Effektpigmenten um solche Pigmente, die optisch effektgebend oder farb- und optisch effektgebend, insbesondere optisch effektgebend, sind. Die Begriffe "optisch effektgebendes und farbgebendes Pigment", "optisch effektgebendes Pigment" und "Effektpigment" sind daher vorzugsweise austauschbar.

Vorzugsweise ist das erfindungsgemäße Verfahren ein Verfahren zur Herstellung einer in der Automobilindustrie einsetzbaren Beschichtungsmittel-zusammensetzung oder einer Vorstufe davon eingesetzt, wobei Schritt (1) des erfindungsgemäßen Verfahrens zur Einwaage einer Komponente unter Verwendung einer gravimetrischen Dosieranlage einschließlich der Stufen (1a) bis (1g) wenigstens insgesamt zweimal für wenigstens zwei voneinander verschiedene Komponenten durchgeführt wird.

Dies ist der Fall, da zur Herstellung von Beschichtungsmittelzusammensetzungen oder einer Vorstufe davon wenigstens zwei unterschiedliche Komponenten erforderlich sind.

Alle im Zusammenhang mit dem erfindungsgemäßen Verfahren zur Einwaage einer Komponente unter Verwendung einer gravimetrischen Dosieranlage hierin zuvor beschriebenen bevorzugten Ausführungsformen sind auch bevorzugte Ausführungsformen hinsichtlich des erfindungsgemäßen Verfahrens zur Herstellung einer in der Automobilindustrie einsetzbaren Beschichtungsmittelzusammensetzung oder einer Vorstufe davon.

### Erfindungsgemäße Dosieranlage

Ein weiterer Gegenstand der vorliegenden Erfindung ist eine erfindungsgemäße gravimetrische Dosieranlage umfassend wenigstens ein Mehrbackenfutter, insbesondere in Kombination mit wenigstens einem Rührwerk umfassend wenigstens ein Rührorgan, welches vom Antrieb des Rührwerks abund/oder ankoppelbar ist, insbesondere eines solchen Rührorgans, welches eine Rührwelle umfasst, die einen oder mehrere Rührkörper aufweist.

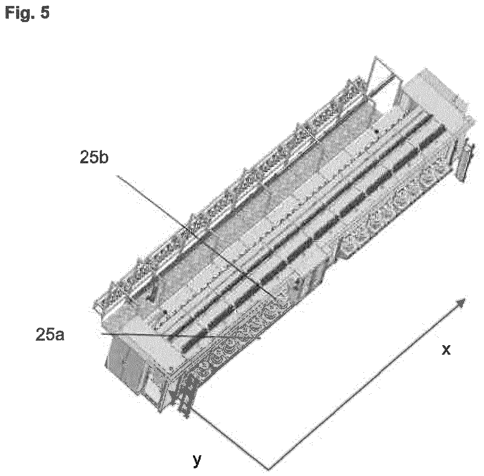

**Fig. 5** zeigt eine erfindungsgemäß eingesetzte Dosieranlage, die wenigstens zwei hintereinander angeordnete Reihen (25a) und (25b) an Dosierventilen aufweist, die sich jeweils entlang der ebenfalls in dieser Figur eingezeichneten x-Achse erstrecken.

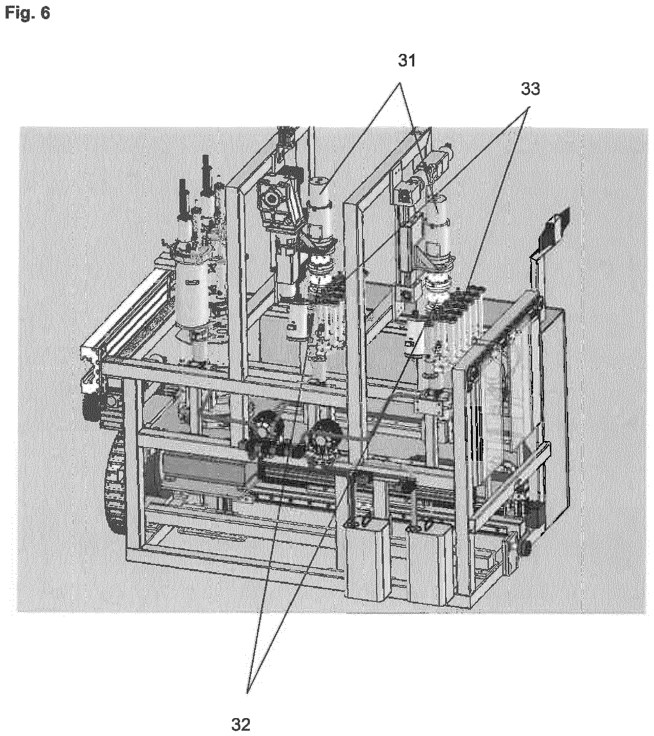

**Fig. 6** zeigt einen vergrößerten Ausschnitt eines Dosiermoduls, welcher auf der Dosierstrecke eines Dosierautomaten einer Dosieranlage gemäß Fig. 5 in Richtung der x-Achse über die gesamte Strecke starre Dosierventile (33) anfahren kann. Um zusätzlich auch in y-Richtung, d.h. die hintereinander gereihten Dosierventile (33) des Dosieranlage zu erreichen, wird die eingesetzte Waage mit dem Mischbehälter innerhalb dieses Dosiermoduls in der y-Achse verfahren. Innerhalb dieses in Fig. 6 dargestellten Dosiermoduls sind zudem die dort montierten Rührwerke (31) mit der Drehdurchführung des Mehrbackenfutters (32) erkennbar.

### Beispiele und Vergleichsbeispiele

Das nachfolgende Beispiel und das nachfolgende Vergleichsbeispiel dienen der Erläuterung der Erfindung, sind jedoch nicht einschränkend auszulegen.

### Vergleichsbeispiel V1

Ein Behälter A befindet sich auf einer Waage A1 In den Behälter A soll mittels eines Dosierventils eine Zielformulierung hergestellt werden. Als erste Komponente sollen aus einem Vorratsbehälter B 3000 g deionisiertes Wasser in den Behälter A dosiert werden. Der Vorratsbehälter B steht auf einer Waage B1 und beinhaltet eine Menge von 4000 g an deionisiertem Wasser. In den Behälter A ragt eine Rührwelle, an die wenigstens ein Rührkörper befestigt ist, um eine Durchmischung innerhalb des Behälters A während der Dosierung zu gewährleisten. Rührwelle und Rührkörper sind Teil eines Rührwerks, welches durch einen Motor ansteuerbar ist. Rührwelle und Rührkörper stellen das Rührorgan des Rührwerks dar. Das Rührwerk ist an einem Stativ befestigt, welches sich neben dem Behälter A befindet. Das Rührwerk befindet sich im Kraftschluss mit der Umgebung.

Aus dem Vorratsbehälter B werden nun 3000 g Wasser in den Behälter A unter Rühren dosiert. Die Dosierung erfolgt dabei innerhalb von mehreren Dosierphasen: am Anfang der Dosierung werden vergleichsweise große Mengen an Wasser unter Rühren dosiert (Grobdosierung). Zum Ende der Dosierung werden vergleichsweise kleine Mengen dosiert (Feindosierung und Ultrafeindosierung), um eine Überdosierung zu vermeiden. Während des gesamten Vorgangs wird gerührt.

Die Menge der Zugabe in den Behälter A wird über die Waage A1 gesteuert: sobald Waage A1 eine erfolgte Menge an Zugabe von 3000 g anzeigt, wird die Dosierung beendet. Die Waage A1 weist zwar eine erfolgte zugegebene Menge von 3000 g in den Behälter A auf, jedoch zeigt die Waage B1, auf der sich der Vorratsbehälter B befindet, zur gleichen Zeit nur eine erfolgte Entnahme von 2928 g an. Die Differenz von 72 g wird nur aufgrund der Verdrängung der zu dosierten Menge an Wasser in den Behälter A aufgrund des angekoppelten Rührwerks aufgrund des Verdrängungsvolumens des Rührkörpers und der Rührwelle als vermeintliche Zugabe von der Waage A1 während des Rührprozesses aufgrund der Auftriebskraft angezeigt. In Wirklichkeit sind aber nur - wie die Waage B1 korrekt angezeigt hat - 2928 g Wasser in den Behälter A eingewogen worden, d.h. es ist eine unerwünschte Unterdosierung und damit Fehldosierung von 72 g erfolgt.

### Beispiel B1

Prinzipiell wird der gleiche Aufbau wie im Zusammenhang mit dem Vergleichsbeispiel V1 beschrieben auch für das Beispiel B1 verwendet. Die Dosierung erfolgt unter kontinuierlichem Rühren, jedoch nur während der Dauer der jeweiligen Dosierungen (d.h. während der Dauer der Grobdosierung, Feindosierung und Ultrafeindosierung, also während der Dauer der jeweiligen Dosierphasen). Nach Beenden jeder Dosierphase wird das Rührorgan mittels des erfindungsgemäßen Mehrbackenfutters von dem Antrieb des Rührwerks, d.h. von dem Motor abgekoppelt. Dadurch befindet sich das Rührorgan im abgekoppelten Zustand nicht im Kraftschluss mit der Umgebung. Im abgekoppelten Zustand wird nun über die Waage A1 die eingewogene Menge kontrolliert und gesteuert. Ist der Soll-Wert der Einwaagemenge noch nicht erreicht, erfolgt eine Ankopplung von Rührorgan mittels des Mehrbackenfutters an den Antrieb des Rührwerks und es wird in einer weiteren Dosierphase weiter unter Rühren dosiert. Im Anschluss wird das Rührorgan wieder abgekoppelt und über die Waage A1 die eingewogene Menge kontrolliert. Dies wird solange wiederholt, bis der Soll-Wert der Einwaagemenge erreicht ist.

Nach erfolgter Dosierung zeigen beide Waagen A1 und B1 die korrekte Einwaagemenge von 3000 g an, d.h. im Gegensatz zu Vergleichsbeispiel V1 kommt es nicht zu einer Fehldosierung (Unterdosierung).

### Beispiel B2

Es wird der gleiche Aufbau wie in Beispiel B1 realisiert. Zunächst erfolgt eine gravimetrische Bestimmung des Leergewichts des eingesetzten Behälters A1 (Tarieren). Während dieser Bestimmung ist das Rührorgan von dem Antrieb des Rührwerks abgekoppelt. Nach der erfolgten gravimetrischen Bestimmung des Leergewichts des eingesetzten Behälters erfolgt eine Ankopplung des Rührorgans an den Antrieb des Rührwerks.

Es sollen insgesamt 2000 g einer Komponente 1 in den Behälter A1 dosiert werden.

Zunächst erfolgt unter Rühren eine Soll-Zugabe von 1800 g der Komponente (also noch 200 g fehlend bis zum Soll-Endwert). Die Zugabe erfolgt kontinuierlich in einer ersten Dosierphase bei vergleichsweise weiter Ventilöffnung (Grobdosierung). Nach der Dosierung erfolgt eine Abkopplung des Rührorgans von dem Antrieb des Rührwerks und es erfolgt eine gravimetrische Bestimmung, gemäß derer eine erfolgte Soll-Zugabe von 1800 g in den Behälter ermittelt wird.

Nun erfolgt wiederum eine Ankopplung des Rührorgans an den Antrieb des Rührwerks. Als nächstes erfolgt unter Rühren eine Soll-Zugabe von weiteren 100 g der Komponente (also insgesamt 1900 g und dann noch 100 g fehlend bis zum Soll-Endwert). Die Zugabe erfolgt kontinuierlich in einer Dosierphase bei vergleichsweise engerer Ventilöffnung (Feindosierung). Nach der Dosierung erfolgt eine Abkopplung des Rührorgans von dem Antrieb des Rührwerks und es erfolgt eine gravimetrische Bestimmung, gemäß derer eine erfolgte Soll-Zugabe von 100 g in den Behälter ermittelt wird (auf insgesamt 1900 g).

Nun erfolgt wiederum eine Ankopplung des Rührorgans an den Antrieb des Rührwerks. Als nächstes erfolgt unter Rühren eine Soll-Zugabe der weiteren und letzten 100 g der Komponente (auf dann insgesamt 2000 g als Soll-Endwert). Die Zugabe erfolgt in wenigstens einer weiteren Dosierphase, die jedoch im Gegensatz zur Grobdosierung und Feindosierung zuvor diskontinuierlich erfolgt und mehrere kurze Dosierpulse umfasst. Die Zugabe erfolgt wie bei der Feindosierung bei vergleichsweise enger Ventilöffnung. Es wird zunächst eine Dosierphase umfassend 5 Dosierpulse gewählt, mittels derer eine Soll-Zugabe von zunächst 30 g erzielt werden soll. Nach dieser Dosierung erfolgt eine Abkopplung des Rührorgans von dem Antrieb des Rührwerks und es erfolgt eine gravimetrische Bestimmung, gemäß derer eine erfolgte Soll-Zugabe von 30 g in den Behälter ermittelt wird (auf nunmehr 1930 g). Nun erfolgt wiederum eine Ankopplung des Rührorgans an den Antrieb des Rührwerks und es wird eine weitere Dosierphase umfassend 5 Dosierpulse gewählt, mittels derer eine Soll-Zugabe von 30 g erzielt werden soll. Nach dieser Dosierung erfolgt eine Abkopplung des Rührorgans von dem Antrieb des Rührwerks und es erfolgt eine gravimetrische Bestimmung, gemäß derer eine erfolgte Soll-Zugabe von 40 g in den Behälter ermittelt wird (auf nunmehr 1970 g). Somit ist in dieser Dosierphase eine Überdosierung von 10 g (40 g statt 30 g) erfolgt. Nun erfolgt wiederum eine Ankopplung des Rührorgans an den Antrieb des Rührwerks und es wird eine weitere Dosierphase umfassend 5 Dosierpulse gewählt, mittels derer eine Soll-Zugabe von 20 g erzielt werden soll. Nach dieser Dosierung erfolgt eine Abkopplung des Rührorgans von dem Antrieb des Rührwerks und es erfolgt eine gravimetrische Bestimmung, gemäß derer eine erfolgte Soll-Zugabe von 20 g in den Behälter ermittelt wird (auf nunmehr 1990 g). Sofern dieser Wert noch nicht innerhalb der vorgegebenen zulässigen Fehlertoleranz liegt, können nach erneuter Ankopplung des Rührorgans an den Antrieb des Rührwerks nun weitere Dosierphasen umfassend weniger als 5 wie zum Beispiel genau einen Dosierpuls gewählt werden, um sich dem Soll-Endwert von 2000 g exakt zu nähern.

## Patentansprüche

1. Ein Verfahren zur Einwaage wenigstens einer Komponente unter Verwendung einer gravimetrischen Dosieranlage gemäß einem Rezept zur Herstellung einer Zielformulierung, wobei das Verfahren wenigstens den Schritt 1) umfasst, nämlich
1) eine Dosierung der wenigstens einen Komponente mittels wenigstens eines Dosierventils (33) in einen geeigneten Behälter,
wobei die Dosierung gemäß Schritt 1) in wenigstens zwei Dosierphasen I und II erfolgt, während der Dauer von jeder der wenigstens zwei Dosierphasen I und II zumindest teilweise eine Durchmischung der in dem Behälter befindlichen Komponente unter Einsatz eines Rührwerks (31) erfolgt, welches wenigstens einen Antrieb und wenigstens ein Rührorgan umfasst, und Schritt 1) innerhalb von wenigstens sieben Stufen 1a), 1b), 1c), 1d), 1e), 1f) und 1g) in dieser Reihenfolge durchgeführt wird, nämlich
1a) erste Dosierung während der Dauer der ersten Dosierphase I unter Durchmischung mittels des Rührwerks (31),
1b) Abkopplung des Rührorgans von dem Antrieb des Rührwerks (31),
1c) gravimetrische Bestimmung der Menge der innerhalb von Stufe 1a) in den Behälter dosierten Komponente mittels einer Waage,
1d) Ankopplung des Rührorgans an den Antrieb des Rührwerks (31),
1e) zweite Dosierung während der Dauer der zweiten Dosierphase II unter Durchmischung mittels des Rührwerks (31),
1f) Abkopplung des Rührorgans von dem Antrieb des Rührwerks (31), und
1g) gravimetrische Bestimmung der Menge der innerhalb von Stufe 1e) in den Behälter dosierten Komponente mittels einer Waage, wobei die Dosierung gemäß Schritt 1) gegebenenfalls ein oder mehrere weitere Dosierphasen umfasst, wenn die gravimetrische Bestimmung gemäß Stufe 1g) ergibt, dass die eingewogene und in den Behälter dosierte Menge der Komponente noch nicht der derjenigen Menge entspricht, die durch das Rezept der Zielformulierung vorgegeben ist, **dadurch gekennzeichnet, dass** das Abkoppeln gemäß den Stufen 1b) und 1f) und das Ankoppeln gemäß Stufe 1d) mittels eines Mehrbackenfutters, umfassend wenigstens ein Spannsystem (200) und wenigstens eine Drehdurchführung (100) durchgeführt wird,
wobei das Spannsystem (200) mindestens drei Spannbacken (6) umfasst, die zur Fixierung wenigstens eines Rührorgans eines Rührwerks (31) geeignet sind und
wobei die Drehdurchführung (100) zur Aufnahme eines Rührorgans eines Rührwerks (31) geeignet ist und mindestens einen Druckluftanschluss aufweist, der eine pneumatische Ansteuerung der Spannbacken (6) ermöglicht.

2. Das Verfahren gemäß Anspruch 1, **dadurch gekennzeichnet, dass** das Mehrbackenfutter mindestens sechs Spannbacken (6) aufweist.

3. Das Verfahren gemäß Anspruch 1 oder 2, **dadurch gekennzeichnet, dass** das Spannsystem (200) einen beweglichen Kolben (4) umfasst.

4. Das Verfahren gemäß Anspruch 1 bis 3, **dadurch gekennzeichnet, dass**
wenigstens eine der beiden Dosierphasen I und II kontinuierlich erfolgt.

5. Das Verfahren gemäß Anspruch 1 bis 4, **dadurch gekennzeichnet, dass**
wenigstens eine der beiden Dosierphasen I und II diskontinuierlich erfolgt und wenigstens zwei oder mehr Dosierpulse umfasst.

6. Das Verfahren gemäß einem der Ansprüche 1 bis 5, **dadurch gekennzeichnet, dass** das Abkoppeln gemäß den Stufen 1b) und 1f) und das Ankoppeln gemäß Stufe 1d) jeweils automatisiert erfolgt.

7. Das Verfahren gemäß Anspruch 6, **dadurch gekennzeichnet, dass** die Automatisierung mittels Unterstützung einer Software erfolgt.

8. Das Verfahren gemäß einem der Ansprüche 1 bis 7, **dadurch gekennzeichnet, dass** das wenigstens eine Rührorgan des Rührwerks (31) eine Rührwelle und wenigstens einen daran befestigten Rührkörper aufweist.

9. Das Verfahren gemäß einem der Ansprüche 1 bis 8, **dadurch gekennzeichnet, dass** es zur Herstellung einer in der Automobilindustrie einsetzbaren Beschichtungsmittelzusammensetzung oder einer Vorstufe davon eingesetzt wird, wobei Schritt 1) des Verfahrens einschließlich der Stufen 1a) bis 1g) wenigstens insgesamt zweimal für wenigstens zwei voneinander verschiedene Komponenten durchgeführt wird.

10. Eine gravimetrische Dosieranlage, **dadurch gekennzeichnet, dass** sie wenigstens ein Mehrbackenfutter umfasst, welches ein Spannsystem (200) und wenigstens eine Drehdurchführung (100) umfasst, wobei das Spannsystem (200) mindestens drei Spannbacken (6) umfasst, die zur Fixierung wenigstens eines Rührorgans eines Rührwerks (31) geeignet sind und wobei die Drehdurchführung (100) zur Aufnahme eines Rührorgans eines Rührwerks (31) geeignet ist und mindestens einen Druckluftanschluss aufweist, der eine pneumatische Ansteuerung der Spannbacken (6) ermöglicht.

11. Die gravimetrische Dosieranlage gemäß Anspruch 10, **dadurch gekennzeichnet, dass** das Mehrbackenfutter mindestens sechs Spannbacken (6) aufweist.

12. Die gravimetrische Dosieranlage gemäß Anspruch 10 oder 11, **dadurch gekennzeichnet, dass** das Spannsystem (200) einen beweglichen Kolben (4) umfasst.

## Claims

1. Method for weighing at least one component while using a gravimetric dosing system according to a recipe for producing a target formula, wherein the method comprises at least step 1), specifically
1) dosing the at least one component into a suitable vessel by means of at least one dosing valve (33), wherein the dosing according to step 1) takes place in at least two dosing phases I and II; at least partial mixing of the component situated in the vessel takes place while using an agitator (31) during the duration of each of the at least two dosing phases I and II, said agitator (31) comprising at least one drive and at least one agitator member, and step 1) is carried out within at least seven stages 1a), 1b), 1c), 1d), 1e), 1f) and 1g) in this sequence, specifically
1a) first dosing during the duration of the first dosing phase I while mixing by means of the agitator (31);
1b) decoupling the agitator member from the drive of the agitator (31);
1c) gravimetrically determining the quantity of the component dosed into the vessel within stage 1a) by means of a weighing machine;
1d) coupling the agitator member to the drive of the agitator (31);
1e) second dosing during the duration of the second dosing phase II while mixing by means of the agitator (31);
1f) decoupling the agitator member from the drive of the agitator (31); and
1g) gravimetrically determining the quantity of the component dosed into the vessel within stage 1e) by means of a weighing machine;
wherein the dosing according to step 1) optionally comprises one or a plurality of further dosing phases if the gravimetric determination according to stage 1g) results in the weighed quantity of the component dosed into the vessel not yet corresponding to the quantity predefined by the recipe of the target formula,
**characterized in that** the decoupling according to stages 1b) and 1f) and the coupling according to stage 1d) is carried out by means of a multi-jaw chuck comprising at least one clamping system (200) and at least one rotary feed through (100), wherein the clamping system (200) comprises at least three clamping jaws (6) which are suitable for fixing at least one agitator member of an agitator (31), and
wherein the rotary feed through (100) is suitable for receiving an agitator member of an agitator (31) and has at least one compressed air connector which enables a pneumatic actuation of the clamping jaws (6) .

2. Method according to Claim 1, **characterized in that** the multi-jaw chuck has at least six clamping jaws (6) .

3. Method according to Claim 1 or 2, **characterized in that** the clamping system (200) comprises a movable piston (4).

4. Method according to Claim 1 to 3, **characterized in that** at least one of the two dosing phases I and II takes place continuously.

5. Method according to Claim 1 to 4, **characterized in that** at least one of the two dosing phases I and II takes place discontinuously and comprises at least two or more dosing pulses.

6. Method according to one of Claims 1 to 5, **characterized in that** the decoupling according to stages 1b) and 1f) and the coupling according to stage 1d) each takes place in an automated manner.

7. Method according to Claim 6, **characterized in that** the automation takes place by a software-supported means.

8. Method according to one of Claims 1 to 7, **characterized in that** the at least one agitator member of the agitator (31) has an agitation shaft and at least one agitator element fastened thereto.

9. Method according to one of Claims 1 to 8, **characterized in that** said method is used for producing a coating agent composition usable in the automotive industry, or a precursor thereof, wherein step 1) of the method including stages 1a) to 1g) in total is carried out at least twice for at least two mutually dissimilar components.

10. Gravimetric dosing system, **characterized in that** said gravimetric dosing system comprises at least one multi-jaw chuck which comprises a clamping system (200) and at least one rotary feed through (100), wherein the clamping system (200) comprises at least three clamping jaws (6) which are suitable for fixing at least one agitator member of an agitator (31), and wherein the rotary feed through (100) is suitable for receiving an agitator member of an agitator (31) and has at least one compressed air connector which enables a pneumatic actuation of the clamping jaws (6).

11. Gravimetric dosing system according to Claim 10, **characterized in that** the multi-jaw chuck has at least six clamping jaws (6).

12. Gravimetric dosing system according to Claim 10 or 11, **characterized in that** the clamping system (200) comprises a movable piston (4).

## Revendications

1. Procédé pour peser au moins un composant en utilisant une installation de dosage gravimétrique selon une recette pour la préparation d'une formulation cible, le procédé comprenant au moins l'étape 1), à savoir
1) un dosage de l'au moins un composant au moyen d'au moins une soupape de dosage (33) dans un récipient approprié,
le dosage selon l'étape 1) étant effectué en au moins deux phases de dosage I et II ; pendant la durée de chacune des au moins deux phases de dosage I et II, un mélange du composant se trouvant dans le récipient étant effectué au moins partiellement en utilisant un mécanisme d'agitation (31), qui comprend au moins un entraînement et au moins un organe d'agitation, et l'étape 1) étant réalisée en au moins sept étapes 1a), 1b), 1c), 1d), 1e), 1f) et 1g) dans cet ordre, à savoir
1a) le premier dosage pendant la durée de la première phase de dosage I avec mélange au moyen du mécanisme d'agitation (31),
1b) le découplage de l'organe d'agitation de l'entraînement du mécanisme d'agitation (31),
1c) la détermination gravimétrique de la quantité du composant dosé dans le récipient au cours de l'étape 1a) au moyen d'une balance,
1d) le couplage de l'organe d'agitation à l'entraînement du mécanisme d'agitation (31),
1e) le deuxième dosage pendant la durée de la deuxième phase de dosage II avec mélange au moyen du mécanisme d'agitation (31),
1f) le découplage de l'organe d'agitation de l'entraînement du mécanisme d'agitation (31), et
1g) la détermination gravimétrique de la quantité du composant dosé dans le récipient au cours de l'étape 1e) au moyen d'une balance,
le dosage selon l'étape 1) comprenant éventuellement une ou plusieurs phases de dosage supplémentaires lorsque la détermination gravimétrique selon l'étape 1g) indique que la quantité du composant pesée et dosée dans le récipient ne correspond pas encore à la quantité prescrite par la recette de la formulation cible,
**caractérisé en ce que** le découplage selon les étapes 1b) et 1f) et le couplage selon l'étape 1d) est réalisé au moyen d'un mandrin à plusieurs mâchoires, comprenant au moins un système de serrage (200) et au moins un passage tournant (100),
le système de serrage (200) comprenant au moins trois mâchoires de serrage (6), qui sont appropriées pour la fixation d'au moins un organe d'agitation d'un mécanisme d'agitation (31) et
le passage tournant (100) étant approprié pour la réception d'un organe d'agitation d'un mécanisme d'agitation (31), et présentant au moins un raccord d'air comprimé, qui permet une commande pneumatique des mâchoires de serrage (6).

2. Procédé selon la revendication 1, **caractérisé en ce que** le mandrin à plusieurs mâchoires présente au moins six mâchoires de serrage (6).

3. Procédé selon revendication 1 ou 2, **caractérisé en ce que** le système de serrage (200) comprend un piston mobile (4).

4. Procédé selon les revendications 1 à 3, **caractérisé en ce qu'**au moins une des deux phases de dosage I et II est effectuée de manière continue.

5. Procédé selon les revendications 1 à 4, **caractérisé en ce qu'**au moins une des deux phases de dosage I et II est effectuée de manière discontinue et comprend au moins deux impulsions de dosage ou plus.

6. Procédé selon l'une quelconque des revendications 1 à 5, **caractérisé en ce que** le découplage selon les étapes 1b) et 1f) et le couplage selon l'étape 1d) s'effectue à chaque fois de manière automatisée.

7. Procédé selon la revendication 6, **caractérisé en ce que** l'automatisation est effectuée avec l'assistance d'un logiciel.

8. Procédé selon l'une quelconque des revendications 1 à 7, **caractérisé en ce que** l'au moins un organe d'agitation du mécanisme d'agitation (31) comprend un arbre d'agitation et au moins un corps d'agitation fixé à celui-ci.

9. Procédé selon l'une quelconque des revendications 1 à 8, **caractérisé en ce qu'**il est utilisé pour la préparation d'une composition d'agent de revêtement ou d'un précurseur de celle-ci, utilisable dans l'industrie automobile, l'étape 1) du procédé, y compris les étapes 1a) à 1g), étant réalisée au moins deux fois au total pour au moins deux composants différents l'un de l'autre.

10. Installation de dosage gravimétrique, **caractérisée en ce qu'**elle comprend au moins un mandrin à plusieurs mâchoires, qui comprend un système de serrage (200) et au moins un passage tournant (100), le système de serrage (200) comprenant au moins trois mâchoires de serrage (6), qui sont appropriées pour la fixation d'au moins un organe d'agitation d'un mécanisme d'agitation (31), et le passage tournant (100) étant approprié pour la réception d'un organe d'agitation d'un mécanisme d'agitation (31), et présentant au moins un raccord d'air comprimé, qui permet une commande pneumatique des mâchoires de serrage (6).

11. Installation de dosage gravimétrique selon la revendication 10, **caractérisée en ce que** le mandrin à plusieurs mâchoires présente au moins six mâchoires de serrage (6).

12. Installation de dosage gravimétrique selon la revendication 10 ou 11, **caractérisée en ce que** le système de serrage (200) comprend un piston mobile (4).
